# EUROPÄISCHE PATENTSCHRIFT

(11) **EP 3 528 921 B1**
(45) Veröffentlichungstag und Bekanntmachung des Hinweises auf die Patenterteilung: **31.03.2021**
(21) Anmeldenummer: 17791303.5
(22) Anmeldetag: 11.10.2017
(51) Int. Cl.: B01D 46/00

(54) **RUSSFILTERVORRICHTUNG UND VERFAHREN ZUM BETREIBEN EINER RUSSFILTERVORRICHTUNG**
PARTICULATE FILTER AND PROCESS OF OPERATING SAME
FITLRE A PARTICULE ET PROCEDE DE OPERER UN TEL FILTRE

(30) Priorität: 18.10.2016 DE 102016220417
(43) Veröffentlichungstag der Anmeldung: 28.08.2019
(73) Patentinhaber: Hug Engineering AG, 8352 Elsau (CH)
(72) Erfinder: KILCHSPERGER, Roland, 8360 Wallenwil (CH); CAVEGN, Lukas, 8512 Lustdorf (CH)
(74) Vertreter: Hoeger, Stellrecht & Partner Patentanwälte mbB
(86) Internationale Anmeldenummer: PCT/EP2017/075976
(87) Internationale Veröffentlichungsnummer: WO 2018/073079

(56) Entgegenhaltungen:
- EP-A1- 2 965 799
- AT-A1- 511 688
- DE-A1- 3 808 075
- DE-A1- 19 525 134
- DE-A1-102006 000 785
- US-A- 5 458 673

## Beschreibung

Die vorliegende Erfindung betrifft eine Strömungsvorrichtung und ein Verfahren zum Betreiben einer Strömungsvorrichtung. Die Strömungsvorrichtung ist insbesondere eine Abscheidevorrichtung zur Verwendung als Abgasreinigungsvorrichtung in einem Abgasstrang eines Verbrennungsmotors. Der Verbrennungsmotor ist insbesondere ein mit Schweröl als Brennstoff betriebener Verbrennungsmotor, beispielsweise ein Schiffsmotor, und/oder ein sonstiger Verbrennungsmotor, welcher beispielsweise mit feststoffbelasteten Brennstoffen und/oder feststoffbelasteten Schmierstoffen betrieben wird.

Strömungsvorrichtungen sowie Verfahren zum Betreiben derselben sind beispielsweise aus der DE 38 08 075 A1 und der AT 511 688 A1 bekannt.

Der vorliegenden Erfindung liegt die Aufgabe zugrunde, eine Strömungsvorrichtung der vorstehend genannten Art bereitzustellen, welche einfach aufgebaut und zuverlässig sowie energieeffizient betreibbar ist.

Diese Aufgabe wird erfindungsgemäß durch eine Strömungsvorrichtung zum Entfernen von Verunreinigungen aus einem Rohgasstrom, insbesondere zum Abscheiden von Rußpartikeln aus Verbrennungsabgas, mit den Merkmalen des Anspruchs 1 gelöst.

Dadurch, dass die Strömungsvorrichtung mehrere Strömungssegmente sowie eine Regenerationsvorrichtung zum Regenerieren derselben aufweist, kann die Strömungsvorrichtung vorzugsweise einfach aufgebaut sowie zuverlässig und energieeffizient betrieben werden. Ferner kann beispielsweise durch die Verwendung von Reingas aus der Reingasabführung als Zuluft für die Heizvorrichtung eine Energieeffizienz der Strömungsvorrichtung erhöht werden.

Die Strömungsvorrichtung ist vorzugsweise eine Abscheidevorrichtung.

Die Strömungssegmente sind vorzugsweise Abscheidesegmente.

Die Strömungskörper sind vorzugsweise Abscheidekörper.

Der Reinigungsmodus ist vorzugsweise ein Abscheidemodus.

Zum Entfernen von Verunreinigungen werden die Verunreinigungen vorzugsweise abgeschieden und/oder umgewandelt.

Günstig kann es sein, wenn die Heizvorrichtung eine von der den Rohgasstrom erzeugenden Vorrichtung verschiedene Vorrichtung ist.

Die Heizvorrichtung ist insbesondere ein Zusatzbrenner oder umfasst einen solchen, welcher ausschließlich der Bereitstellung des Heißgasstroms dient.

Der Zusatzbrenner ist insbesondere eine von dem Verbrennungsmotor zur Erzeugung des Verbrennungsabgases verschiedene Vorrichtung.

Alternativ oder ergänzend hierzu kann vorgesehen sein, dass die Heizvorrichtung eine elektrische Heizvorrichtung ist oder umfasst.

Erfindungsgemäß ist vorgesehen, dass die Regenerationsvorrichtung eine Regenerationsgasführung umfasst, mittels welcher der Heißgasstrom einem oder mehreren zu regenerierenden Strömungssegmenten wahlweise aus unterschiedlichen Richtungen zuführbar ist.

Erfindungsgemäß ist vorgesehen, dass die Regenerationsvorrichtung in einen Heizmodus versetzbar ist, in welchem der Heißgasstrom der Heizvorrichtung derart zu einem oder zu mehreren zu regenerierenden Strömungssegmenten zuführbar ist, dass eine Strömungsrichtung in dem einen oder den mehreren zu regenerierenden Strömungssegmenten einer Strömungsrichtung in einem Reinigungsmodus entspricht, in welcher ein zu reinigender Rohgasstrom zur Reinigung desselben durch das eine oder die mehreren Strömungssegmente strömt.

Erfindungsgemäß ist ferner vorgesehen, dass die Regenerationsvorrichtung in einen Spülmodus versetzbar ist, in welchem der Heißgasstrom der Heizvorrichtung derart zu einem oder zu mehreren zu regenerierenden Strömungssegmenten zuführbar ist, dass eine Strömungsrichtung in dem einen oder den mehreren zu regenerierenden Strömungssegmenten einer Strömungsrichtung in einem Reinigungsmodus entgegengesetzt ist, in welcher ein zu reinigender Rohgasstrom zur Reinigung desselben durch das eine oder die mehreren Strömungssegmente strömt.

Die Regenerationsvorrichtung umfasst vorzugsweise einen Ventilator zum Antreiben des Heißgasstroms.

Ferner kann vorgesehen sein, dass die Regenerationsvorrichtung eine Spül- und/oder Sperrluftvorrichtung umfasst, insbesondere zur Zuführung von Spülgas, beispielsweise Frischluft, zu der Regenerationsgasführung.

Vorteilhaft kann es sein, wenn der Ventilator bezüglich einer Strömungsrichtung des Heißgasstroms in einem Heizmodus der Regenerationsvorrichtung und/oder bezüglich einer Strömungsrichtung des Heißgasstroms in einem Spülmodus der Regenerationsvorrichtung stromabwärts der Heizvorrichtung und/oder stromabwärts des einen oder der mehreren zu regenerierenden Strömungssegmente angeordnet ist.

Die Strömungsrichtung des Heißgasstroms im Heizmodus einerseits und die Strömungsrichtung des Heißgasstroms im Spülmodus sind vorzugsweise im Bereich des einen oder der mehreren zu regenerierenden Strömungssegmente einander entgegengesetzt.

Vorzugsweise ist die Regenerationsgasführung derart ausgebildet, dass dennoch sowohl im Heizmodus als auch im Spülmodus der Ventilator stromabwärts der Heizvorrichtung und/oder stromabwärts des einen oder der mehreren zu regenerierenden Strömungssegmente angeordnet ist.

Bei einer alternativen Ausgestaltung der Erfindung kann vorgesehen sein, dass der Ventilator bezüglich der Strömungsrichtung des Heißgasstroms und/oder bezüglich eines der Heizvorrichtung zuzuführenden Zuluftstroms stromaufwärts der Heizvorrichtung angeordnet ist.

Vorteilhaft kann es sein, wenn die Regenerationsvorrichtung eine Aufnahmevorrichtung zur Abtrennung und Aufnahme von von dem einen oder den mehreren zu regenerierenden Strömungssegmenten entfernten Verunreinigungen umfasst.

Diese Verunreinigungen sind insbesondere Asche, welche während der Durchführung des Heizmodus in dem einen oder den mehreren zu regenerierenden Strömungssegmenten erzeugt wird und zunächst darin verbleibt und vorzugsweise in dem Spülmodus aus dem einen oder den mehreren zu regenerierenden Strömungssegmenten herausgetragen wird.

Die Aufnahmevorrichtung umfasst vorzugsweise einen Feststoffabscheider, insbesondere einen Zyklon, zur Abscheidung von Verunreinigungen, insbesondere Asche, aus dem Gasstrom, insbesondere Heißgasstrom, mittels welchem die Verunreinigungen, insbesondere die Asche, aus dem einen oder den mehreren zu regenerierenden Strömungssegmenten herausgetragen wurden.

Ferner umfasst die Aufnahmevorrichtung vorzugsweise einen Speicherbehälter zur Speicherung der Verunreinigungen, insbesondere der Asche.

Günstig kann es sein, wenn die Aufnahmevorrichtung eine Zellradschleuse umfasst, welche den Feststoffabscheider von dem Speicherbehälter trennt und insbesondere der gezielten Abführung und Weiterleitung von im Feststoffabscheider abgeschiedenen Verunreinigungen an den Speicherbehälter dient.

Es kann vorgesehen sein, dass die Aufnahmevorrichtung mittels der Regenerationsgasführung mit dem einen oder den mehreren zu regenerierenden Strömungssegmenten und/oder mit einem Ventilator der Regenerationsvorrichtung fluidwirksam verbunden ist.

Bezüglich einer Strömungsrichtung des Heißgasstroms und/oder eines Spülgasstroms ist die Aufnahmevorrichtung vorzugsweise zwischen dem einen oder den mehreren zu regenerierenden Strömungssegmenten einerseits und dem Ventilator der Regenerationsvorrichtung andererseits angeordnet.

Bei einer Ausgestaltung der Erfindung kann vorgesehen sein, dass der Heißgasstrom nach dem Durchströmen des einen oder der mehreren zu regenerierenden Strömungssegmente, nach dem Durchströmen der Aufnahmevorrichtung und/oder nach dem Durchströmen des Ventilators der Rohgaszuführung und/oder der Reingasabführung der Strömungsvorrichtung zuführbar ist.

Die Regenerationsgasführung umfasst vorzugsweise mehrere Leitungen, Ventile, Verzweigungen und/oder Zusammenführungen, welche insbesondere derart angeordnet und/oder ausgebildet sind, dass die vorstehend beschriebenen Verbindungen und Ströme möglich sind.

Ein Strömungskörper ist insbesondere ein Filterkörper, beispielsweise ein sogenannter wall flow filter.

Günstig kann es sein, wenn ein Strömungskörper ein wanddurchströmter Wabenkörper ist.

Ein Strömungskörper umfasst vorzugsweise eine katalytische Beschichtung, so dass im Strömungskörper angeordnete, strömende und/oder abgeschiedene Verunreinigungen bei im Vergleich zu einem normalen Verbrennungsvorgang reduzierter Verbrennungstemperatur chemisch umgesetzt werden können.

Ein Strömungskörper ist insbesondere aus einem Keramikmaterial gebildet und/oder mit einer katalytischen Beschichtung versehen.

Die vorliegende Erfindung betrifft ferner ein Verfahren zum Betreiben einer Strömungsvorrichtung, insbesondere zum Abscheiden von Rußpartikeln aus Verbrennungsabgas.

Der Erfindung liegt diesbezüglich die Aufgabe zugrunde, ein Verfahren bereitzustellen, welches einfach und zuverlässig sowie energieeffizient durchführbar ist.

Diese Aufgabe wird erfindungsgemäß durch ein Verfahren zum Betreiben einer Strömungsvorrichtung, insbesondere zum Abscheiden von Rußpartikeln aus Verbrennungsabgas, mit den Merkmalen des Anspruchs 9 gelöst.

Das erfindungsgemäße Verfahren weist vorzugsweise einzelne oder mehrere der im Zusammenhang mit der erfindungsgemäßen Strömungsvorrichtung beschriebenen Merkmale und/oder Vorteile auf.

Erfindungsgemäß ist vorgesehen, dass das eine oder die mehreren zu regenerierenden Strömungssegmente zur Regeneration desselben bzw. derselben zunächst in einer Strömungsrichtung mit dem von der Heizvorrichtung erzeugten Heißgasstrom durchströmt werden, welche der Strömungsrichtung in einem Reinigungsmodus des einen oder der mehreren Strömungssegmente entspricht, und wenn das eine oder die mehreren zu regenerierenden Strömungssegmente anschließend in einer entgegengesetzten Strömungsrichtung mit dem von der Heizvorrichtung erzeugten Heißgasstrom durchströmt werden, welche der Strömungsrichtung in einem Reinigungsmodus des einen oder der mehreren Strömungssegmente entgegengesetzt ist.

Ein oder mehrere Strömungskörper des einen oder der mehreren Strömungssegmente können hierdurch vorzugsweise zunächst ausgebrannt und dann durch einen Rückspülvorgang von beim Verbrennungsvorgang übrigbleibender Asche befreit werden.

In einem Reinigungsmodus in dem einen oder den mehreren Strömungssegmenten abgeschiedene Verunreinigungen werden in einem Heizmodus vorzugsweise zumindest teilweise verbrannt.

Nach dem Heizmodus noch in dem einen oder den mehreren Strömungssegmenten enthaltene Verunreinigungen werden vorzugsweise in einem Spülmodus aus dem einen oder den mehreren Strömungssegmenten herausgespült, insbesondere in einem Rückspülverfahren oder alternativ auch in einem Durchspülverfahren.

Die Strömungssegmente der Strömungsvorrichtung werden vorzugsweise einzeln nacheinander mittels der Regenerationsvorrichtung regeneriert.

Insbesondere wird stets jeweils nur ein Strömungssegment regeneriert, während die übrigen Strömungssegmente im Reinigungsmodus betrieben und somit insbesondere zum Entfernen von Verunreinigungen aus dem Rohgasstrom genutzt werden.

Günstig kann es sein, wenn der Heißgasstrom in einem Heizmodus der Regenerationsvorrichtung ausgehend von der Heizvorrichtung zunächst ein oder mehrere zu regenerierende Strömungssegmente und anschließend einen Ventilator zum Antreiben des Heißgasstroms durchströmt.

Alternativ oder ergänzend hierzu kann vorgesehen sein, dass der Heißgasstrom in einem Spülmodus der Regenerationsvorrichtung ausgehend von der Heizvorrichtung zunächst ein oder mehrere zu regenerierende Strömungssegmente, dann eine Aufnahmevorrichtung zum Abtrennen und Aufnehmen von aus dem einen oder den mehreren Strömungssegmenten herausgespülten Verunreinigungen und anschließend einen Ventilator zum Antreiben des Heißgasstroms durchströmt.

Die Strömungsvorrichtung, insbesondere die Regenerationsvorrichtung, umfasst vorzugsweise eine oder mehrere Messvorrichtungen, Regelvorrichtungen, Steuervorrichtungen und/oder Überwachungsvorrichtungen zum Ermitteln und Beeinflussen von Betriebsparametern der Strömungsvorrichtung, insbesondere der Regenerationsvorrichtung.

Beispielsweise wird der Ventilator druckabhängig gesteuert, um bei der Verwendung von Abgas, insbesondere Reingas aus der Reingasabführung oder Rohgas aus der Rohgaszuführung, im Betrieb der Heizvorrichtung einen Unterdruck (Druck unterhalb von Atmosphärendruck) in der Regenerationsgasführung aufrechtzuerhalten und somit einen unerwünschten Abgasaustritt zu vermeiden.

Ferner wird vorzugsweise durch Druckmessungen und/oder Temperaturmessungen stromaufwärts und/oder stromabwärts des einen oder der mehreren zu regenerierenden Strömungssegmente ein Heizmodus und/oder Spülmodus gesteuert und/oder überwacht.

Die Strömungsvorrichtung und/oder das Verfahren können ferner vorzugsweise einzelne oder mehrere der nachfolgend beschriebenen Merkmale und/oder Vorteile aufweisen:
Der Heißgasstrom wird vorzugsweise im Heizmodus an der Aufnahmevorrichtung vorbeigeführt.

Günstig kann es sein, wenn mittels der Regenerationsvorrichtung ein Lockerungsmodus zur Lockerung von in dem einen oder den mehreren Strömungskörpern enthaltenen Verunreinigungen durchführbar ist.

Der Lockerungsmodus ist beispielsweise Bestandteil des Heizmodus und/oder des Spülmodus oder ein hiervon verschiedener Modus.

Der Lockerungsmodus umfasst beispielsweise eine mechanische und/oder fluidwirksame Beaufschlagung der Verunreinigungen und/oder des Strömungskörpers.

Beispielsweise kann der Lockerungsmodus eine Schallreinigung, insbesondere unter Verwendung von Infraschall zwischen beispielsweise ungefähr 50 Hz und ungefähr 200 Hz, umfassen.

Zur Schallreinigung werden der eine oder die mehreren Strömungskörper vorzugsweise von einer Beschallungsseite aus beschallt. Die Beschallungsseite ist vorzugsweise eine Reingasseite oder eine Rohgasseite.

Vorteilhaft kann es sein, wenn zur Schallreinigung eine stehende Welle innerhalb des einen oder der mehreren Strömungssegmente und/oder in einem Ausblasrohr erzeugt wird. Zur Optimierung der Schallreinigung kann vorgesehen sein, dass mittels eines Resonanzsensors eine Schallausbreitung ermittelt und/oder überwacht wird. Insbesondere wird dann vorzugsweise eine Schallquelle angesteuert, um eine Frequenz zur Optimierung der stehenden Welle (Resonanz) gezielt zu variieren.

Eine Ausblasrohrlänge ist vorzugsweise auf die Resonanzfrequenz abgestimmt. Vorzugsweise weist die Ausblasrohrlänge ein Einfaches oder Mehrfaches der Wellenlänge der zur Schallreinigung genutzten Schallwellen auf.

Alternativ oder ergänzend hierzu kann vorgesehen sein, dass der Lockerungsmodus eine Pulsreinigung umfasst, bei welcher Gasdruckpulse, insbesondere Luftdruckpulse, auf den einen oder die mehreren Strömungskörper abgegeben werden.

Eine Spül- und/oder Sperrluftvorrichtung der Strömungsvorrichtung umfasst vorzugsweise einen Verdichter, insbesondere zum Antreiben und/oder Komprimieren von Spülgas.

Der Verdichter ist insbesondere ein Seitenkanalverdichter oder Radialverdichter. Der Verdichter kann ferner als Spülluftventilator bezeichnet werden.

Eine oder mehrere Messvorrichtungen der Strömungsvorrichtung sind beispielsweise zur Volumenstrommessung vorgesehen.

Die eine oder die mehreren Messvorrichtungen umfassen dann insbesondere eine Blendenmessvorrichtung.

Alternativ oder ergänzend hierzu sind insbesondere Temperatur- und/oder Druckmessungen vorgesehen.

Vorzugsweise wird der Ventilator der Regenerationsvorrichtung und/oder der Spülluftventilator einer Spül- und/oder Sperrluftvorrichtung derart gesteuert und/oder geregelt, dass ein Volumenstrom zumindest während der Erfassung von Messwerten mittels einer oder mehrerer Messvorrichtungen konstant ist.

Als Spülgas für die Spül- und/oder Sperrluftvorrichtung wird vorzugsweise Frischluft verwendet. Hierdurch können insbesondere Kondensationsprobleme in der Regenerationsvorrichtung vermieden werden.

Die Spül- und/oder Sperrluftvorrichtung ist vorzugsweise einfach oder mehrfach redundant ausgebildet.

Günstig kann es sein, wenn ein Druck des Spülgases in der Spül- und/oder Sperrluftvorrichtung über einem maximalen Druck stromabwärts einer Turboladervorrichtung des Verbrennungsmotors liegt, beispielsweise mindestens ungefähr 10 mbar darüber. Hierdurch kann vorzugsweise eine effiziente Abdichtung mittels der Spül- und/oder Sperrluftvorrichtung gewährleistet werden, insbesondere um einen unerwünschten Abgasaustritt zu vermeiden. Weitere bevorzugte Merkmale und/oder Vorteile der Erfindung sind Gegenstand der nachfolgenden Beschreibung und der zeichnerischen Darstellung eines Ausführungsbeispiels.

In den Zeichnungen zeigen:
- Fig. 1: eine schematische Darstellung einer Strömungsvorrichtung zur Reinigung von Rohgas, wobei die Strömungsvorrichtung in einem Reinigungsmodus betrieben wird, um mittels Strömungskörpern Verunreinigungen aus dem Rohgasstrom zu entfernen;
- Fig. 2: eine der Fig. 1 entsprechende schematische Darstellung der Strömungsvorrichtung aus Fig. 1, wobei eine Regenerationsvorrichtung der Strömungsvorrichtung in einem Heizmodus betrieben wird; und
- Fig. 3: eine der Fig. 1 entsprechende schematische Darstellung der Strömungsvorrichtung aus Fig. 1, wobei die Regenerationsvorrichtung in einem Spülmodus betrieben wird.

Gleiche oder funktional äquivalente Elemente sind in sämtlichen Figuren mit denselben Bezugszeichen versehen.

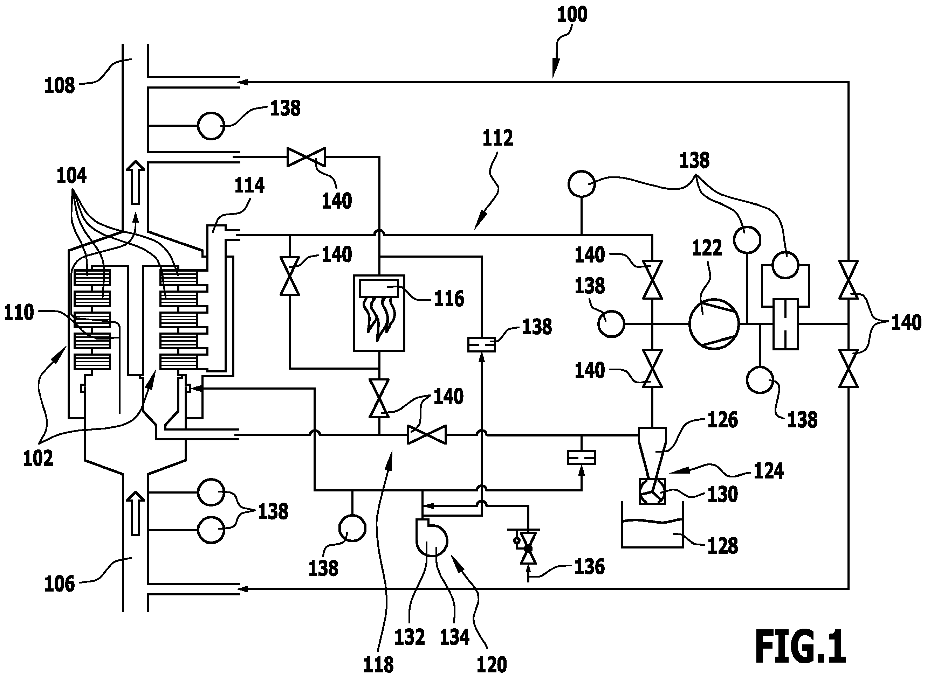

Eine in den Fig. 1 bis 3 dargestellte Ausführungsform einer als Ganzes mit 100 bezeichneten Strömungsvorrichtung ist beispielsweise Bestandteil einer Abgasreinigungsanlage zur Reinigung von Verbrennungsabgas eines Verbrennungsmotors.

Die Strömungsvorrichtung 100 ist dabei insbesondere dafür geeignet, Abgas von Verbrennungsmotoren zu reinigen, welche mit Schweröl betrieben werden. Solche Verbrennungsmotoren sind beispielsweise Schiffsmotoren. Ferner eignet sich die Strömungsvorrichtung 100 vorzugsweise für sonstige Verbrennungsmotoren, welche beispielsweise mit feststoffbelasteten Brennstoffen und/oder feststoffbelasteten Schmierstoffen betrieben werden.

Die Strömungsvorrichtung 100 umfasst vorzugsweise mehrere Strömungssegmente 102, welche jeweils einen oder mehrere Strömungskörper 104 umfassen.

Mittels einer Rohgaszuführung 106 der Strömungsvorrichtung 100 ist zu reinigendes Rohgas zu den Strömungssegmenten 102 zuführbar.

Über eine Reingasabführung 108 der Strömungsvorrichtung 100 kann stromabwärts der Strömungssegmente 102 ein durch Reinigung des Rohgases erhältliches Reingas abgeführt werden.

In dem in Fig. 1 dargestellten Reinigungsmodus der Strömungsvorrichtung 100 strömt ein Rohgasstrom insbesondere längs einer Strömungsrichtung 110 durch die Rohgaszuführung 106, die Strömungssegmente 102 und die Reingasabführung 108.

Die Strömungssegmente 102 sind vorzugsweise unabhängig voneinander mit dem Rohgasstrom durchströmbar.

Die Strömungssegmente 102 sind somit insbesondere funktional voneinander unabhängige Teile der Strömungsvorrichtung 100.

Günstig kann es sein, wenn die Strömungsvorrichtung 100 eine Regenerationsvorrichtung 112 zur Regeneration der Strömungssegmente 102 umfasst.

Die Regenerationsvorrichtung 112 umfasst insbesondere eine Andockvorrichtung 114, mittels welcher eine Verbindung zu jeweils einem der Strömungssegmente 102 herstellbar ist, um dieses Strömungssegment 102 zu regenerieren.

Mittels der Andockvorrichtung 114 kann das zu regenerierende Strömungssegment 102 insbesondere funktional von den übrigen Strömungssegmenten 102 entkoppelt werden. Das zu regenerierende Strömungssegment 102 kann dann insbesondere regeneriert werden, während die übrigen Strömungssegmente 102 vorzugsweise weiterhin im Reinigungsmodus zum Entfernen von Verunreinigungen aus dem Rohgasstrom genutzt werden.

Die Regenerationsvorrichtung 112 umfasst ferner eine Heizvorrichtung 116 sowie eine Regenerationsgasführung 118.

Mittels der Heizvorrichtung 116 ist insbesondere ein Heißgasstrom bereitstellbar, welcher mittels der Regenerationsgasführung 118 gezielt zu dem zu regenerierenden Strömungssegment 102 sowie zu weiteren Bestandteilen der Regenerationsvorrichtung 112 zuführbar ist.

Die Heizvorrichtung 116 wird insbesondere mit einem Brennstoff und einem Oxidator versorgt, um den Heißgasstrom durch Verbrennung des Brennstoffs zu erzeugen.

Als Oxidator kann insbesondere ein Spülgas, insbesondere Frischluft, aus einer separaten Luftversorgung verwendet werden.

Ferner kann als Oxidator Reingas aus der Reingasabführung 108 verwendet werden.

Die Verwendung von Reingas aus der Reingasabführung 108 als Oxidator für die Heizvorrichtung 116 kann insbesondere den Vorteil einer hohen Energieeffizienz bieten.

Die Regenerationsgasführung 118 bildet insbesondere eine fluidwirksame Verbindung zwischen der Reingasabführung 108 und der Heizvorrichtung 116.

Die Regenerationsvorrichtung 112 umfasst ferner einen Ventilator 122, mittels welchem der Heißgasstrom in der Regenerationsgasführung 118 antreibbar ist.

Der Ventilator 122 kann ferner bei einer (nicht dargestellten) weiteren Ausführungsform dazu genutzt werden, Zuluft, Spülgas, Oxidator oder einen sonstigen Gasstrom für die Heizvorrichtung 116 bereitzustellen.

Zudem umfasst die Regenerationsvorrichtung 112 vorzugsweise eine Aufnahmevorrichtung 124 zum Abtrennen und Aufnehmen von in der Regenerationsgasführung 118 befindlichen Verunreinigungen, insbesondere Feststoffen.

Die Aufnahmevorrichtung 124 umfasst insbesondere einen Feststoffabscheider 126, welcher insbesondere als Zyklon ausgebildet ist.

Ferner umfasst die Aufnahmevorrichtung 124 vorzugsweise einen Speicherbehälter 128 zur Aufnahme von abgeschiedenen Verunreinigungen sowie eine Zellradschleuse 130 zur Trennung und/oder Förderung von mittels des Feststoffabscheiders 126 abgeschiedenen Verunreinigungen hin zum Speicherbehälter 128.

Eine Spül- und/oder Sperrluftvorrichtung 120 umfasst vorzugsweise einen Spülluftventilator 132, welcher beispielsweise als Seitenkanalverdichter oder Radialverdichter 134 ausgebildet ist.

Im Falle eines Ausfalls des Spülluftventilators 132 ist der Spül- und/oder Sperrluftvorrichtung 120 vorzugsweise aus einem Sicherheitsdruckluftsystem 136 Druckluft zuführbar. Eine Unterversorgung mit Spül- und/oder Sperrluft kann hierdurch vorzugsweise vermieden werden.

Die Strömungsvorrichtung 100, insbesondere die Regenerationsvorrichtung 112, umfasst ferner vorzugsweise eine oder mehrere Messvorrichtungen 138 und/oder ein oder mehrere Ventile 140.

Mittels der einen oder der mehreren Messvorrichtungen 138 kann insbesondere eine gezielte Steuerung und/oder Regelung der Regenerationsvorrichtung 112 ermöglicht werden.

Mittels des einen oder der mehreren Ventile 140 können insbesondere unterschiedliche Betriebsmodi der Regenerationsvorrichtung 112 eingestellt werden.

In dem in Fig. 1 dargestellten Reinigungsmodus der Strömungsvorrichtung 100 ist die Regenerationsvorrichtung 112 vorzugsweise nicht in Betrieb.

Die Strömungssegmente 102 werden dann insbesondere ausschließlich im Reinigungsmodus betrieben und dienen zur Entfernung von Verunreinigungen aus dem Rohgasstrom.

Die Strömungskörper 104 der Strömungssegmente 102 werden im Reinigungsmodus kontinuierlich mit Verunreinigungen beaufschlagt und hierdurch beispielsweise zunehmend gefüllt und/oder verstopft.

Insbesondere in regelmäßigen Abständen müssen die Strömungssegmente 102 folglich von den abgeschiedenen Verunreinigungen befreit werden.

Dies geschieht mittels der Regenerationsvorrichtung 112.

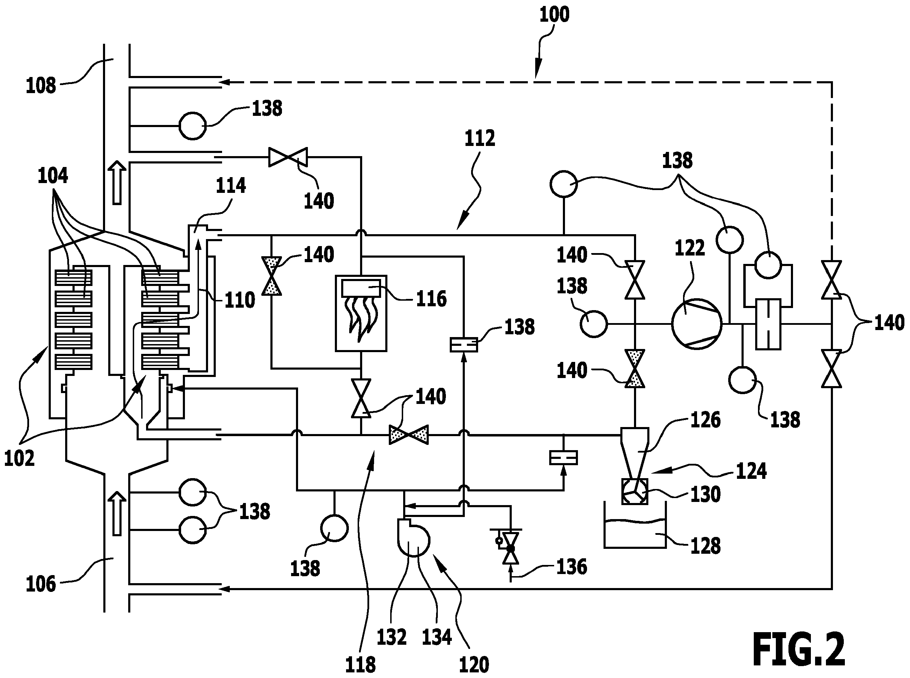

Die Andockvorrichtung 114 der Regenerationsvorrichtung 112 wird dann an eines der Strömungssegmente 102 angedockt und die Regenerationsvorrichtung 112 zunächst in den Heizmodus versetzt (s. Fig. 2).

In diesem Heizmodus wird der Heizvorrichtung 116 Brennstoff und Oxidator, insbesondere Brennstoff und Reingas aus der Reingasabführung 108, zugeführt, um einen Heißgasstrom zu erzeugen. Alternativ oder ergänzend hierzu kann vorgesehen sein, dass mittels der Heizvorrichtung 116 unter Verwendung von elektrischem Strom ein Heißgasstrom erzeugt wird. Die Zuführung von Brennstoff ist dann vorzugsweise entbehrlich.

Dieser Heißgasstrom wird dann zu dem zu regenerierenden Strömungssegment 102 zugeführt, um die Strömungskörper 104 des Strömungssegments 102 zu erhitzen.

Der Heißgasstrom durchströmt die Strömungskörper 104 des zu regenerierenden Strömungssegments 102 dabei insbesondere in einer Strömungsrichtung 110, welche der Strömungsrichtung 110 während des Entfernens von Verunreinigungen im Reinigungsmodus entspricht.

Die in den Strömungskörpern 104 aufgenommenen Verunreinigungen werden somit zumindest vorläufig nicht aus den Strömungskörpern 104 herausgetragen, sondern vielmehr aufgrund der Wärmezufuhr chemisch umgesetzt, vorzugsweise verbrannt.

Die chemische Umsetzung wird vorzugsweise dadurch erleichtert und/oder optimiert, dass die Strömungskörper 104 einen Katalysator, beispielsweise eine katalytische Beschichtung, aufweisen.

Durch das chemische Umsetzen der Verunreinigungen werden teilweise gasförmige oder sonstige Stoffe erzeugt, welche den Strömungskörper 104 längs der Strömungsrichtung 110 durchdringen und folglich verlassen können.

In dem Strömungskörper 104 verbleiben folglich lediglich noch chemisch schwer umzusetzende Verunreinigungen.

Diese verbleibenden Verunreinigungen werden insbesondere als Asche bezeichnet.

Die Asche kann den Strömungskörper 104 in der Strömungsrichtung 110 vorzugsweise nicht durchdringen.

Zur Entfernung der Asche aus den Strömungskörpern 104 wird somit insbesondere ein Rückspülvorgang durchgeführt.

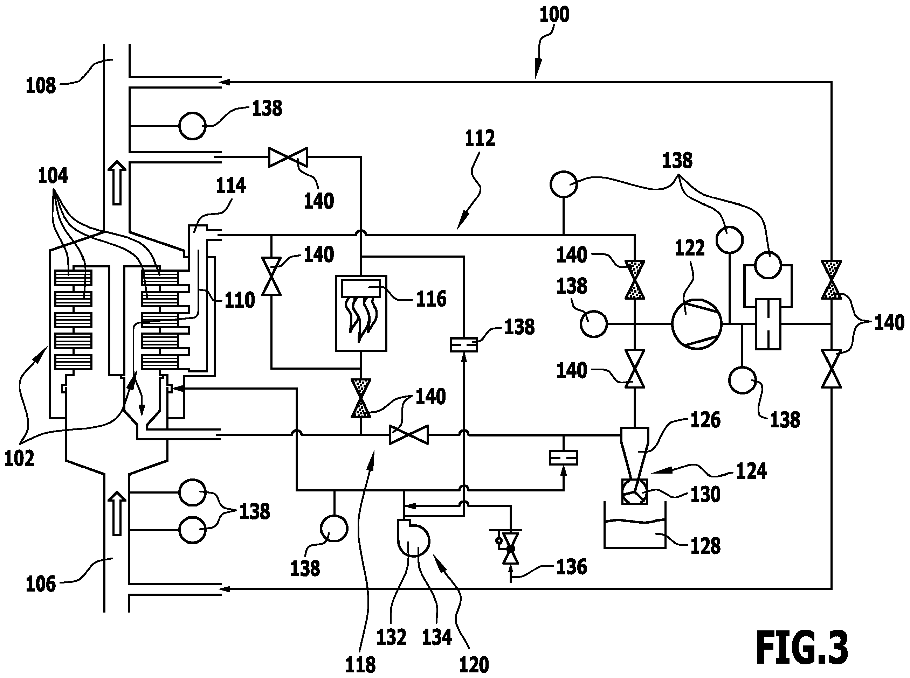

Die Regenerationsvorrichtung 112 wird hierfür vorzugsweise in einen Spülmodus versetzt (s. Fig. 3).

In diesem Spülmodus wird der Heißgasstrom, welcher mittels der Heizvorrichtung 116 erzeugt wird, in einer der Strömungsrichtung 110 im Reinigungsmodus entgegengesetzten Strömungsrichtung 110 durch die Strömungskörper 104 des zu regenerierenden Strömungssegments 102 hindurchgeführt.

Die in den Strömungskörpern 104 angeordnete Asche wird hierdurch aus den Strömungskörpern 104 herausgetragen und mit dem Heißgasstrom aus dem Strömungssegment 102 abgeführt.

Der Heißgasstrom wird anschließend zusammen mit der abgeführten Asche der Aufnahmevorrichtung 124 zugeführt.

Mittels des Feststoffabscheiders 126 wird die Asche dabei von dem Heißgasstrom getrennt und über die Zellradschleuse 130 in den Speicherbehälter 128 befördert.

Im Speicherbehälter 128 wird die Asche zur späteren Entsorgung zwischengespeichert.

Zur zusätzlichen Vereinfachung der Abreinigung der Strömungskörper 104 kann eine (nicht dargestellte) Lockerungsvorrichtung der Regenerationsvorrichtung 112 vorgesehen sein.

Die Lockerungsvorrichtung kann insbesondere eine fluidwirksame Lockerung, beispielsweise unter Verwendung von Druckpulsen, oder eine Schalllockerung, insbesondere unter Verwendung von Resonanz-Schallwellen, umfassen.

Die Lockerungsvorrichtung dient insbesondere zur Vereinfachung und/oder Beschleunigung und/oder Optimierung der Regeneration der Strömungssegmente 102.

Bei der in den Fig. 1 bis 3 dargestellten Ausführungsform der Strömungsvorrichtung 100 ist der Ventilator 122 zum Antreiben des Heißgasstroms bezüglich der Strömungsrichtung 110 des Heißgasstroms in der Regenerationsgasführung 118 stromabwärts der Heizvorrichtung 116, des zu regenerierenden Strömungssegments 102 und gegebenenfalls auch der Aufnahmevorrichtung 124 angeordnet.

Insbesondere dann, wenn als Oxidator oder Zuluft für die Heizvorrichtung 116 Reingas aus der Reingasabführung 108 verwendet wird, kann durch diese Anordnung des Ventilators 122 ein im Vergleich zum umgebenen Atmosphärendruck reduzierter Unterdruck zum Antreiben des Heißgasstroms erzeugt werden, wodurch letztlich ein unerwünschter Austritt von Abgas in die Umgebung der Strömungsvorrichtung 100 wirksam verhindert wird.

Die Spül- und/oder Sperrluftvorrichtung 120 dient vorzugsweise zur Abdichtung oder sonstigen Vermeidung eines Abgasaustritts in die Umgebung der Strömungsvorrichtung 100.

Insbesondere in dem in Fig. 3 dargestellten Spülmodus kann vorzugsweise eine große Spülgasmenge zur Bereitstellung und/oder Erzeugung des Heißgasstroms bereitgestellt werden, um aus den Strömungskörpern 104 entfernte Asche effizient und zuverlässig zu der Aufnahmevorrichtung 124 zuführen zu können.

## Patentansprüche

1. Strömungsvorrichtung (100) zum Entfernen von Verunreinigungen aus einem Rohgasstrom, insbesondere zum Abscheiden von Rußpartikeln aus Verbrennungsabgas, wobei die Strömungsvorrichtung (100) Folgendes umfasst:
- mehrere Strömungssegmente (102), welche jeweils einen oder mehrere Strömungskörper (104) aufweisen und zum Entfernen von Verunreinigungen in einem Reinigungsmodus mit dem Rohgasstrom durchströmbar sind, wobei über eine Rohgaszuführung (106) der Rohgasstrom zu den Strömungssegmenten (102) zuführbar ist und wobei ein mittels der Strömungssegmente (102) gereinigter Reingasstrom mittels einer Reingasabführung (108) von den Strömungssegmenten (102) abführbar ist;
- eine Regenerationsvorrichtung (112) zum Regenerieren der Strömungssegmente (102), wobei die Regenerationsvorrichtung (112) eine Heizvorrichtung (116) umfasst, welcher zur Erzeugung eines Heißgasstroms Reingas aus der Reingasabführung (108) zuführbar ist, **dadurch gekennzeichnet, dass**
die Regenerationsvorrichtung (112) in einen Heizmodus versetzbar ist, in welchem der Heißgasstrom der Heizvorrichtung (116) derart zu einem oder zu mehreren zu regenerierenden Strömungssegmenten (102) zuführbar ist, dass eine Strömungsrichtung (110) in dem einen oder den mehreren zu regenerierenden Strömungssegmenten (102) einer Strömungsrichtung (110) in dem Reinigungsmodus entspricht, in welcher ein zu reinigender Rohgasstrom zur Reinigung desselben durch das eine oder die mehreren Strömungssegmente (102) strömt, dass die Regenerationsvorrichtung (112) in einen Spülmodus versetzbar ist, in welchem der Heißgasstrom der Heizvorrichtung (116) derart zu einem oder zu mehreren zu regenerierenden Strömungssegmenten (102) zuführbar ist, dass eine Strömungsrichtung (110) in dem einen oder den mehreren zu regenerierenden Strömungssegmenten (102) der Strömungsrichtung (110) in dem Reinigungsmodus entgegengesetzt ist, in welcher ein zu reinigender Rohgasstrom zur Reinigung desselben durch das eine oder die mehreren Strömungssegmente (102) strömt und dass die Regenerationsvorrichtung (112) eine Regenerationsgasführung (118) umfasst, mittels welcher der Heißgasstrom einem oder mehreren zu regenerierenden Strömungssegmenten (102) wahlweise aus unterschiedlichen Richtungen zuführbar ist.

2. Strömungsvorrichtung (100) nach Anspruch 1, **dadurch gekennzeichnet, dass** die Strömungsvorrichtung (100) eine Abscheidevorrichtung ist, dass die Strömungssegmente (102) Abscheidesegmente sind und dass die Strömungskörper (104) Abscheidekörper sind.

3. Strömungsvorrichtung (100) nach einem der Ansprüche 1 oder 2, **dadurch gekennzeichnet, dass** die Regenerationsvorrichtung (112) einen Ventilator (122) zum Antreiben des Heißgasstroms umfasst.

4. Strömungsvorrichtung (100) nach Anspruch 3, **dadurch gekennzeichnet, dass** der Ventilator (122) bezüglich einer Strömungsrichtung (110) des Heißgasstroms in dem Heizmodus der Regenerationsvorrichtung (112) und/oder bezüglich einer Strömungsrichtung (110) des Heißgasstroms in dem Spülmodus der Regenerationsvorrichtung (112) stromabwärts der Heizvorrichtung (116) und/oder stromabwärts des einen oder der mehreren zu regenerierenden Strömungssegmente (102) angeordnet ist.

5. Strömungsvorrichtung (100) nach einem der Ansprüche 1 bis 4, **dadurch gekennzeichnet, dass** die Regenerationsvorrichtung (112) eine Aufnahmevorrichtung (124) zur Abtrennung und Aufnahme von von dem einen oder den mehreren zu regenerierenden Strömungssegmenten (102) entfernten Verunreinigungen umfasst.

6. Strömungsvorrichtung (100) nach Anspruch 5, **dadurch gekennzeichnet, dass** die Aufnahmevorrichtung (124) mittels der Regenerationsgasführung (118) mit dem einen oder den mehreren zu regenerierenden Strömungssegmenten (102) und/oder mit einem Ventilator (122) der Regenerationsvorrichtung (112) fluidwirksam verbunden ist.

7. Strömungsvorrichtung (100) nach einem der Ansprüche 1 bis 6, **dadurch gekennzeichnet, dass** der Heißgasstrom der Heizvorrichtung (116) nach dem Durchströmen des einen oder der mehreren zu regenerierenden Strömungssegmente (102) der Rohgaszuführung (106) und/oder der Reingasabführung (108) der Strömungsvorrichtung (100) zuführbar ist.

8. Verfahren zum Betreiben einer Strömungsvorrichtung (100) nach einem der Ansprüche 1-7, insbesondere zum Abscheiden von Rußpartikeln aus Verbrennungsabgas, wobei das Verfahren Folgendes umfasst:
Durchströmen mehrerer Strömungssegmente (102) der Strömungsvorrichtung (100) in einem Reinigungsmodus mit einem zu reinigenden Rohgasstrom, wobei Verunreinigungen aus dem Rohgasstrom in Strömungskörpern (104) der Strömungssegmente (102) abgeschieden und/oder umgewandelt werden und stromabwärts der Strömungssegmente (102) ein Reingasstrom erhalten wird;
Regenerieren eines oder mehrerer Strömungssegmente (102) mittels einer Regenerationsvorrichtung (112), wobei mittels einer Heizvorrichtung (116) unter Verwendung von Reingas aus dem Reingasstrom ein Heißgasstrom erzeugt und dem einen oder den mehreren zu regenerierenden Strömungssegmenten (102) zugeführt wird, **dadurch gekennzeichnet, dass** das eine oder die mehreren zu regenerierenden Strömungssegmente (102) zur Regeneration desselben beziehungsweise derselben zunächst in einer Strömungsrichtung (110) mit dem von der Heizvorrichtung (116) erzeugten Heißgasstrom durchströmt werden, welche der Strömungsrichtung (110) in dem Reinigungsmodus des einen oder der mehreren Strömungssegmente (102) entspricht, und dass das eine oder die mehreren zu regenerierenden Strömungssegmente (102) anschließend in einer entgegengesetzten Strömungsrichtung (110) mit dem von der Heizvorrichtung (116) erzeugten Heißgasstrom (116) durchströmt werden, welche der Strömungsrichtung (110) in dem Reinigungsmodus des einen oder der mehreren Strömungssegmente (102) entgegengesetzt ist, wobei der von der Heizvorrichtung (116) erzeugte Heißgasstrom mittels einer Regenerationsgasführung (118) der Regenerationsvorrichtung (112) einem oder mehreren zu regenerierenden Strömungssegmenten (102) wahlweise aus unterschiedlichen Richtungen zugeführt wird.

9. Verfahren nach Anspruch 8, **dadurch gekennzeichnet, dass** in dem Reinigungsmodus in dem einen oder den mehreren Strömungssegmenten (102) abgeschiedene Verunreinigungen in einem Heizmodus zumindest teilweise verbrannt werden und dass nach dem Heizmodus noch in dem einen oder den mehreren Strömungssegmenten (102) enthaltene Verunreinigungen in einem Spülmodus aus den Strömungssegmenten (102) herausgespült werden.

10. Verfahren nach Anspruch 8 oder 9, **dadurch gekennzeichnet, dass** die Strömungssegmente (102) einzeln nacheinander mittels der Regenerationsvorrichtung (112) regeneriert werden.

11. Verfahren nach einem der Ansprüche 8 bis 10, **dadurch gekennzeichnet,**
a) **dass** der Heißgasstrom in einem Heizmodus der Regenerationsvorrichtung (112) ausgehend von der Heizvorrichtung (116) zunächst ein oder mehrere zu regenerierende Strömungssegmente (102) und anschließend einen Ventilator (122) zum Antreiben des Heißgasstroms durchströmt; und/oder
b) **dass** der Heißgasstrom in einem Spülmodus der Regenerationsvorrichtung (112) ausgehend von der Heizvorrichtung (116) zunächst ein oder mehrere zu regenerierende Strömungssegmente (102), dann eine Aufnahmevorrichtung (124) zum Abtrennen und Aufnehmen von aus dem einen oder den mehreren Strömungssegmenten (102) herausgespülten Verunreinigungen und anschließend einen Ventilator (122) zum Antreiben des Heißgasstroms durchströmt.

## Claims

1. A flow device (100) for removing pollutants from an uncleaned gas stream, in particular for separating soot particles from combustion exhaust gas, wherein the flow device (100) comprises the following:
- a plurality of flow segments (102), which each have one or more flow bodies (104) and which in a cleaning mode can be passed through by the uncleaned gas stream in order to remove pollutants, wherein the uncleaned gas stream can be supplied to the flow segments (102) by means of an uncleaned gas supply (106), and wherein a clean gas stream that has been cleaned by means of the flow segments (102) can be discharged from the flow segments (102) by means of a clean gas discharge (108);
- a regeneration device (112) for regenerating the flow segments (102), wherein the regeneration device (112) comprises a heating device (116) to which clean gas from the clean gas discharge (108) can be supplied to generate a hot gas stream, **characterised in that**
the regeneration device (112) can be set to a heating mode, in which the hot gas stream of the heating device (116) can be supplied to one or more flow segments (102) to be regenerated in such a way that a flow direction (110) in the one or more flow segments (102) to be regenerated corresponds to a flow direction (110) in the cleaning mode, in which an uncleaned gas stream that is to be cleaned passes through the one or more flow segments (102) in order to be cleaned, **in that** the regeneration device (112) can be set to a flushing mode, in which the hot gas stream of the heating device (116) can be supplied to one or more flow segments (102) to be regenerated in such a way that a flow direction (110) in the one or more flow segments (102) to be regenerated is opposite the flow direction (110) in the cleaning mode, in which an uncleaned gas stream that is to be cleaned passes through the one or more flow segments (102) in order to be cleaned, and **in that** the regeneration device (112) comprises a regeneration gas guide (118), by means of which the hot gas stream can be supplied selectively from different directions to one or more flow segments (102) to be regenerated.

2. A flow device (100) according to claim 1, **characterised in that** the flow device (100) is a separation device, **in that** the flow segments (102) are separation segments, and **in that** the flow bodies (104) are separation bodies.

3. A flow device (100) according to one of claims 1 or 2, **characterised in that** the regeneration device (112) comprises a fan (122) for driving the hot gas stream.

4. A flow device (100) according to claim 3, **characterised in that** the fan (122) is arranged downstream of the heating device (116) and/or downstream of the one or more flow segments (102) to be regenerated, relative to a flow direction (110) of the hot gas stream in the heating mode of the regeneration device (112) and/or relative to a flow direction (110) of the hot gas stream in the flushing mode of the regeneration device (112).

5. A flow device (100) according to one of claims 1 to 4, **characterised in that** the regeneration device (112) comprises a collection device (124) for separating and collecting pollutants removed from the one or more flow segments (102) to be regenerated.

6. A flow device (100) according to claim 5, **characterised in that** the collection device (124) is fluidically connected by means of the regeneration gas guide (118) to the one or more flow segments (102) to be regenerated and/or to a fan (122) of the regeneration device (112).

7. A flow device (100) according to one of claims 1 to 6, **characterised in that** the hot gas stream of the heating device (116), after having passed through the one or more flow segments (102) to be regenerated, can be supplied to the uncleaned gas supply (106) and/or to the clean gas discharge (108) of the flow device (100).

8. A method for operating a flow device (100) according to one of claims 1-7, in particular for separating soot particles from combustion exhaust gas, wherein the method comprises the following:
passing an uncleaned gas stream that is to be cleaned through a plurality of flow segments (102) of the flow device (100) in a cleaning mode, wherein pollutants are separated and/or converted from the uncleaned gas stream in flow bodies (104) of the flow segments (102) and a clean gas stream is obtained downstream of the flow segments (102);
regenerating one or more flow segments (102) by means of a regeneration device (112), wherein a hot gas stream is produced by means of a heating device (116) using clean gas from the clean gas stream and is supplied to the one or more flow segments (102) to be regenerated, **characterised in that** the one or more flow segments (102) to be regenerated, in order to be regenerated, are firstly passed through by the hot gas stream produced by the heating device (116) in a flow direction (110) corresponding to the flow direction (110) in the cleaning mode of the one or more flow segments (102), and **in that** the one or more flow segments (102) to be regenerated are then passed through by the hot gas stream (116) produced by the heating device (116) in an opposite flow direction (110), which is opposite to the flow direction (110) in the cleaning mode of the one or more flow segments (102), wherein the hot gas stream produced by the heating device (116) is supplied selectively from different directions by means of a regeneration gas guide (118) of the regeneration device (112) to the one or more flow segments (102) to be regenerated.

9. A method according to claim 8, **characterised in that**, in the cleaning mode, separated pollutants in the one or more flow segments (102) are at least partially burned in a heating mode, and **in that** after the heating mode any pollutants still contained in the one or more flow segments (102) are flushed out from the flow segments (102) in a flushing mode.

10. A method according to claim 8 or 9, **characterised in that** the flow segments (102) are regenerated individually one after the other by means of the regeneration device (112).

11. A method according to one of claims 8 to 10, **characterised in that**
a) the hot gas stream in a heating mode of the regeneration device (112), starting from the heating device (116), passes firstly through one or more flow segments (102) to be regenerated and then through a fan (122) for driving the hot gas stream; and/or
b) the hot gas stream in a flushing mode of the regeneration device (112), starting from the heating device (116), passes firstly through one or more flow segments (102) to be regenerated and then through a collection device (124) for separating and collecting pollutants flushed out from the one or more flow segments (102) and then through a fan (122) for driving the hot gas stream.

## Revendications

1. Dispositif d'écoulement (100) pour l'élimination d'impuretés hors d'un flux de gaz brut, plus particulièrement pour la séparation des particules de suie d'un gaz d'échappement de combustion, dans lequel le dispositif d'écoulement (100) comprend ce qui suit :
- plusieurs segments d'écoulement (102) qui comprennent respectivement un ou plusieurs corps d'écoulement (104) et peuvent être traversés par le flux de gaz brut pour l'élimination des impuretés dans un mode de purification, dans lequel, par l'intermédiaire d'une alimentation en gaz brut (106), le flux de gaz brut peut être introduit dans les segments d'écoulement (102) et dans lequel un flux de gaz purifié, purifié au moyen des segments d'écoulement (102), peut être évacué hors des segments d'écoulement (102) au moyen d'une évacuation de gaz pur (108) ;
- un dispositif de régénération (112) pour la régénération des segments d'écoulement (102), dans lequel le dispositif de régénération (112) comprend un dispositif de chauffage (116), dans lequel, pour la production d'un flux de gaz chaud, du gaz pur provenant de l'évacuation de gaz pur (108) peut être introduit, **caractérisé en ce que**
le dispositif de régénération (112) peut être mis dans un mode de chauffage, dans lequel le flux de gaz chaud du dispositif de chauffage (116) peut être introduit dans un ou plusieurs segments d'écoulement (102) à régénérer, de façon à ce qu'une direction d'écoulement (110) dans le ou les plusieurs segments d'écoulement (102) à régénérer corresponde à une direction d'écoulement (110) dans le mode de purification, dans laquelle un flux de gaz brut à purifier s'écoule, pour la purification de celui-ci, à travers le ou les plusieurs segments d'écoulement (102), **en ce que** le dispositif de régénération (112) peut être mis dans un mode de rinçage, dans lequel le flux de gaz chaud du dispositif de chauffage (116) peut être introduit dans un ou plusieurs segments d'écoulement (102) à régénérer de façon à ce qu'une direction d'écoulement (110) dans le ou les plusieurs segments d'écoulement (102) à régénérer soit opposée à la direction d'écoulement (110) dans le mode de purification, dans laquelle un flux de gaz brut à purifier s'écoule, pour la purification de celui-ci, à travers le ou les plusieurs segments d'écoulement (102) et **en ce que** le dispositif de régénération (112) comprend une conduite de gaz de régénération (118) au moyen de laquelle le flux de gaz chaud peut être introduit de manière sélective à partir de différentes directions dans un ou plusieurs segments d'écoulement (102) à régénérer.

2. Dispositif d'écoulement (100) selon la revendication 1, **caractérisé en ce que** le dispositif d'écoulement (100) est un dispositif de séparation, **en ce que** les segments d'écoulement (102) sont des segments de séparation et **en ce que** les corps d'écoulement (104) sont des corps de séparation.

3. Dispositif d'écoulement (100) selon l'une des revendications 1 ou 2, **caractérisé en ce que** le dispositif de régénération (112) comprend un ventilateur (122) pour l'entraînement du flux de gaz chaud.

4. Dispositif d'écoulement (100) selon la revendication 3, **caractérisé en ce que** le ventilateur (122) est disposé, par rapport à une direction d'écoulement (110) du flux de gaz chaud en mode de chauffage du dispositif de régénération (112) et/ou par rapport à une direction d'écoulement (110) du flux de gaz chaud dans le mode de rinçage du dispositif de régénération (112), en aval du dispositif de chauffage (116) et/ou en aval du ou des segments d'écoulement (102) à régénérer.

5. Dispositif d'écoulement (100) selon l'une des revendications 1 à 4, **caractérisé en ce que** le dispositif de régénération (112) comprend un dispositif d'absorption (124) pour la séparation et l'absorption des impuretés éliminées par le ou les plusieurs segments d'écoulement (102) à régénérer.

6. Dispositif d'écoulement (100) selon la revendication 5, **caractérisé en ce que** le dispositif d'absorption (124) est relié de manière fluidique au moyen de la conduite de gaz de régénération (118) avec le ou les plusieurs segments d'écoulement (102) à régénérer et/ou avec un ventilateur (122) du dispositif de régénération (112).

7. Dispositif d'écoulement (100) selon l'une des revendications 1 à 6, **caractérisé en ce que** le flux de gaz chaud du dispositif de chauffage (116) peut être introduit, après la traversée du ou des plusieurs segments d'écoulement (102) à régénérer dans l'alimentation en gaz brut (106) et/ou dans l'évacuation de gaz pur (108) du dispositif d'écoulement (100).

8. Procédé de fonctionnement d'un dispositif d'écoulement (100) selon l'une des revendications 1 - 7, plus particulièrement pour la séparation des particules de suie d'un gaz d'échappement de combustion,
dans lequel le procédé comprend ce qui suit :
traversée de plusieurs segments d'écoulement (102) du dispositif d'écoulement (100), en mode de purification, par un flux de gaz brut à purifier, dans lequel les impuretés sont séparées du flux de gaz brut dans des corps d'écoulement (104) des segments d'écoulement (102) et/ou transformés et un flux de gaz purifié est obtenu en aval des segments d'écoulement (102) ;
régénération d'un ou plusieurs segments d'écoulement (102) au moyen d'un dispositif de régénération (112), dans lequel, au moyen d'un dispositif de chauffage (116), à l'aide d'un gaz pur provenant du flux de gaz pur, un flux de gaz chaud est généré et introduit dans le ou les plusieurs segments d'écoulement (102) à régénérer, **caractérisé en ce que** le ou les plusieurs segments d'écoulement (102) à régénérer sont traversés, pour la régénération de celui-ci respectivement de ceux-ci, par le flux de gaz chaud généré par le dispositif de chauffage (116), d'abord dans une direction d'écoulement (110) qui correspond à la direction d'écoulement (110) dans le mode de purification du ou des plusieurs segments d'écoulement (102), et **en ce que** le ou les plusieurs segments d'écoulement (102) à régénérer sont ensuite traversés par le flux de gaz chaud (116) généré par le dispositif de chauffage (116) dans une direction d'écoulement (110) opposée qui est opposée à la direction d'écoulement (110) dans le mode de purification du ou des plusieurs segments d'écoulement (102), dans lequel le flux de gaz chaud généré par le dispositif de chauffage (116) est introduit, au moyen d'une conduite de gaz de régénération (118) du dispositif de régénération (112), dans un ou plusieurs segments d'écoulement (102) à régénérer de manière sélective à partir de différentes directions.

9. Procédé selon la revendication 8, **caractérisé en ce que**, les impuretés séparées, dans le mode de purification, dans le ou les plusieurs segments d'écoulements (102) sont au moins partiellement brûlées dans un mode de chauffage et **en ce que** les impuretés encore contenues, après le mode de chauffage, dans le ou les segments d'écoulements (102) sont éliminées par rinçage des segments d'écoulement (102) dans un mode de rinçage.

10. Procédé selon la revendication 8 ou 9, **caractérisé en ce que** les segments d'écoulement (102) sont régénérés successivement de manière individuelle au moyen du dispositif de régénération (112).

11. Procédé selon l'une des revendications 8 à 10, **caractérisé en ce que**
a) le flux de gaz chaud traverse, dans un mode de chauffage du dispositif de régénération (112), à partir du dispositif de chauffage (116), d'abord un ou plusieurs segments d'écoulement (102) à régénérer puis un ventilateur (122) pour l'entraînement du flux de gaz chaud ; et/ou
b) le flux de gaz chaud traverse, dans un mode de rinçage du dispositif de régénération (112), à partir du dispositif de chauffage (116), d'abord un ou plusieurs segments d'écoulement (102) à régénérer puis un dispositif d'absorption (124) pour la séparation et l'absorption des impuretés éliminées par rinçage du ou des plusieurs segments d'écoulement (102) puis un ventilateur (122) pour l'entraînement du flux de gaz chaud.
